# EUROPÄISCHE PATENTSCHRIFT

(11) **EP 1 623 217 B1**
(45) Veröffentlichungstag und Bekanntmachung des Hinweises auf die Patenterteilung: **08.06.2016**
(21) Anmeldenummer: 04724973.5
(22) Anmeldetag: 01.04.2004
(51) Int. Cl.: G01N 15/06

(54) **SENSOR ZUR DETEKTION VON TEILCHEN**
SENSOR FOR DETECTING PARTICLES
CAPTEUR POUR DETECTER DES PARTICULES

(30) Priorität: 02.05.2003 DE 10319664
(43) Veröffentlichungstag der Anmeldung: 08.02.2006
(73) Patentinhaber: ROBERT BOSCH GMBH, 70442 Stuttgart (DE)
(72) Erfinder: BERGER, Joachim, 73650 Winterbach (DE); STROHMAIER, Rainer, 70565 Stuttgart (DE); HEIMANN, Detlef, 70839 Gerlingen (DE); BREUER, Norbert, 71254 Ditzingen (DE); WIRTH, Ralf, 71229 Leonberg (DE); REINHART, Karl-Franz, 74189 Weinsberg (DE); SCHMIDT, Ralf, 70839 Gerlingen (DE); BAUER, Walter, 71735 Eberdingen (DE); BALDENHOFER, Kai, 70193 Stuttgart (DE); KAMP, Bernhard, 71640 Ludwigsburg (DE); GRAU, Thomas, 74535 Mainhardt (DE)
(86) Internationale Anmeldenummer: PCT/DE2004/000677
(87) Internationale Veröffentlichungsnummer: WO 2004/097392

(56) Entgegenhaltungen:
- WO-A-03/046534
- DE-A- 10 133 384
- DE-C- 4 339 737
- US-A- 5 824 271
- US-B1- 6 634 210
- PATENT ABSTRACTS OF JAPAN vol. 009, no. 281 (P-403), 8. November 1985 (1985-11-08) & JP 60 123757 A (NIPPON TOKUSHU TOGYO KK), 2. Juli 1985 (1985-07-02)

## Beschreibung

### Stand der Technik

Die Erfindung geht von einem Sensor zur Detektion von Teilchen in einem Gasstrom, insbesondere von Rußpartikeln in einem Abgasstrom, gemäß der im Oberbegriff des Patentanspruches 1 näher definierten Art aus.

Ein derartiger Sensor ist aus DE 10124907 A1 bekannt und dient beispielsweise zur Bestimmung der Rußkonzentration eines Abgases einer Diesel-Brennkraftmaschine. Dieser Sensor bildet einen resistiven Partikelsensor, bei dem mindestens zwei Elektroden auf einem Substrat angeordnet sind, das beispielsweise aus Aluminiumoxid oder yttriumstabilisiertem Zirkoniumdioxid mit Isolationsschicht gefertigt ist. Die Elektroden können als interdigitale Kammelektroden ausgebildet sein. Rußpartikel, die sich in dem Bereich zwischen den Elektroden anlagern, schließen die Elektroden kurz, wodurch mit steigender Partikel- bzw. Rußkonzentration auf der Sensorfläche ein abnehmender elektrischer Widerstand zwischen den Elektroden meßbar ist.

Da die Elektroden direkt dem Abgasstrom ausgesetzt sind, kann bei diesem bekannten Sensor nachteilhafterweise eine Korrosion der Elektroden und eine Kontamination der Sensorfläche mit Stoffen auftreten, was sich störend auf die Messung auswirken kann.

Insbesondere bei Diesel-Brennkraftmaschinen soll das an die Umgebung abgeführte Abgas eine möglichst geringe Rußpartikelkonzentration aufweisen. Zur Überwachung des Betriebszustands der Brennkraftmaschine ist es hierbei zweckmäßig, einen Rußsensor in dem der Brennkraftmaschine zugeordneten Abgasstrang anzuordnen um so den Betriebszustand der Brennkraftmaschine zu überwachen. Der Rußsensor kann stromauf oder stromab eines Rußfilters angeordnet sein. Bei einer Anordnung stromab des Rußfilters kann mittels des Rußsensors auch eine Funktionsüberwachung des Rußfilters durchgeführt werden.

Ein Rußsensor der oben beschriebenen Art ist jedoch unter den in dem Abgasstrang herrschenden Bedingungen störanfällig.

Aus der DE 101 33 384 A1 ist bereits ein Sensor zur Detektion von Teilchen in einem Gasstrom, insbesondere von Rußpartikeln in einem Abgasstrom, mit mindestens zwei Messelektroden bekannt. Die Messelektroden sind auf einem Substrat aus einem isolierenden Werkstoff angeordnet. Die Messelektroden sind dabei in der Weise in dem Sensor untergebracht, dass sie zumindest teilweise von einer Fanghülse überdeckt sind. Unmittelbar sind die Messelektroden jedoch von einem Dielektrikum überdeckt, das wiederum mit einer Schutzschicht versehen ist, so dass es gegenüber dem umgebenden Medium abgetrennt ist, womit eine Degeneration des Dielektrikums ausgeschlossen ist.

### Vorteile der Erfindung

Der erfindungsgemäße Sensor zur Detektion von Teilchen in einem Gasstrom, insbesondere von Rußpartikeln in einem Abgasstrom, mit den Merkmalen nach dem Oberbegriff des Patentanspruches 1, bei welchem Sensor die Meßelektroden von einer Schutzschicht überzogen sind, hat den Vorteil, daß die Elektroden insbesondere bei rauhen Umgebungstemperaturen vor Korrosion geschützt sind.

Ferner kann bei dem Sensor nach der Erfindung durch eine gezielte Materialauswahl eine Kontamination der nun von der Schutzschicht gebildeten sensitiven Fläche mit unerwünschten Stoffen verhindert und damit die Querempfindlichkeit des Sensors verringert werden.

Der Sensor nach der Erfindung, der einen resistiven Sensor für leitfähige Teilchen bzw. Partikel darstellt, kann beispielsweise zur Anordnung in einem Abgasstrang eines Kraftfahrzeuges mit einem Dieselmotor oder auch zum Einsatz im Bereich der Haustechnik bei einer Ölheizung ausgelegt sein, wobei er je nach Anwendungsfall mit einer entsprechend ausgelegten Halterung versehen ist.

Beim Einsatz in einen Abgasstrang eines Kraftfahrzeuges ist der Sensor beispielsweise ein Ruß-Partikel-Sensor, der Bestandteil eines sogenannten On-Board-Diagnose-Systems ist. Der Sensor kann dann auch zur Überwachung eines Diesel-Partikel-Filters in dem Abgasstrang eingesetzt werden.

Die Schutzschicht des Sensors gemäß der Erfindung ist bei einer vorteilhaften Ausführungsform aus einem Material gefertigt, das eine geringere Leitfähigkeit als die zu detektierenden Teilchen hat. Wenn die Widerstandsmessung an dem Sensor als rein resistive Gleichstrommessung durchgeführt werden soll, ist es zweckmäßig, für die Schutzschicht ein hochohmig leitfähiges Grundmaterial einzusetzen. So kann die Schutzschicht in diesem Fall aus einem elektrisch isolierenden Grundmaterial, beispielsweise aus Aluminiumoxid Al₂O₃ oder aus Zirkoniumdioxid ZrO₂, hergestellt sein, das mit einem leitfähigen Stoff, wie einem Metall oder Graphit, dotiert ist. Mittels des leitfähigen Stoffes kann die Leitfähigkeit bzw. der elektrische Widerstand der Schutzschicht gezielt eingestellt und hinsichtlich der zu detektierenden Teilchen optimiert werden. Bei Betriebstemperaturen unterhalb von etwa 300°C kann auch yttriumstabilisiertes Zirkoniumdioxid eingesetzt werden.

Alternativ ist es auch möglich, die Schutzschicht aus einem ionenleitenden Material, wie beispielsweise Silberiodid AgI, zu fertigen. Grundsätzlich kann aber jedes Material eingesetzt werden, das die bei dem jeweiligen Anwendungsfall erforderlichen Eigenschaften aufweist.

Wenn der Sensor nach einem Impedanzmeßverfahren betrieben werden soll und für das eingesetzte Meßverfahren mithin Wechselstromsignale eingesetzt werden, kann die Schutzschicht einen elektrischen Widerstand aufweisen, der gegen unendlich geht. Dies ist beispielsweise bei reinem Aluminiumoxid Al₂O₃ der Fall.

Vorteilhaft ist es, wenn das Material der isolierenden Schutzschicht eine hohe Dielektrizitätskonstante und eine geringe Dicke hat. Die daraus resultierende hohe Kapazität ermöglicht die Messung eines durch die Teilchenbelegung dominierten Impedanzsignals schon bei geringen Meßfrequenzen. Hierdurch werden kapazitive Störströme, die durch die Kapazität des Substrats bedingt sind, unterdrückt. Vorteilhaft sind hier Materialien, die für Keramikkondensatoren verwendet werden, wie z. B. dotiertes BaTiO₃.

Besonders günstige Meßergebnisse können erreicht werden, wenn die Elektroden als interdigitale Kammelektroden auf einer Fläche des Substrats angeordnet sind. Die Schutzschicht überzieht dann in vorteilhafter Weise die gesamte Fläche des Substrats, wobei deren Dicke zumindest im Bereich der mindestens zwei Elektroden so gewählt ist, daß sie maximal ein Zehntel des Abstandes zwischen den beiden Meßelektroden beträgt. So ist beim Betrieb des Sensors gewährleistet, daß die elektrische Leitfähigkeit des Sensorbereichs zwischen den beiden Elektroden im wesentlichen durch die Belegung der Schutzschicht mit Teilchen vorgegeben wird. Der Schutzschichtbereich zwischen den Elektroden und der Oberfläche der Schutzschicht hat aufgrund seiner geringen Dicke, daß einerseits der Widerstand ohne Teilchen-Rußbelastung zwischen den Interdigitalen hoch ist. Andererseits ist aber der Widerstand zwischen der Teilchen- bzw. Rußschicht und den Interdigitalelektroden gering. Somit erhält man ein günstiges Verhältnis zwischen Grundsignal, bei dem keine Teilchen- bzw. Rußbeladung und Meßsignal, bei dem eine Teilchen- bzw. Rußbeladung vorliegt.

Um eine vollständige Kantenbedeckung der Elektroden zu gewährleisten, kann des weiteren in dem Zwischenraum zwischen den Elektroden eine Füllschicht auf dem Substrat angeordnet sein, deren Dicke im wesentlichen derjenigen der Meßelektroden entspricht. Die Füllschicht kann aus dem gleichen Material wie die Schutzschicht, aber auch aus einem anderen Material gefertigt sein, das einen elektrischen Isolator darstellt.

Ferner kann die Schutzschicht des Sensors sowohl hinsichtlich ihrer Zusammensetzung als auch hinsichtlich ihrer 0-berflächenbeschaffenheit so eingestellt sein, daß sich nur spezielle Teilchen, wie Rußpartikel, anlagern, wohingegen unerwünschte Partikel, wie beispielsweise Sulfate oder Phosphate, abgestoßen werden. Dies kann beispielsweise dadurch realisiert werden, dass die Schutzschicht bzw. deren Oberfläche einen möglichst unpolaren Charakter hat.

Durch die Schutzschicht an der dem Gasstrom ausgesetzten Seite des Sensors wird auch die Oberflächenbeschaffenheit für die Anlagerung der Teilchen, insbesondere von Ruß, vereinheitlicht, was gegenüber den bisherigen Bedingungen mit einer zwischen Metall und Dielektrikum wechselnden Oberfläche vorteilhaft ist.

Bezüglich der Materialauswahl ist des weiteren vorteilhaft, wenn das Substrat aus einem hochisolierendem Werkstoff, beispielsweise aus einer Keramik wie Aluminiumoxid, gefertigt ist.

Die Fertigung des Sensors nach der Erfindung, d. h. das Aufbringen der Elektroden, der Schutzschicht und gegebenenfalls der Füllschicht, kann nach einem Siebdruckverfahren erfolgen, was aus Kostengründen vorteilhaft ist. Ferner ist es zweckmäßig, wenn die Schutzschicht nach einem Cofire-Prozeß gefertigt werden kann. Jedoch ist es auch denkbar, die Schutzschicht nach einem Postfire-Prozeß herzustellen.

Des weiteren kann der Sensor gemäß der Erfindung zur Reinigung der dem Gasstrom ausgesetzten Fläche mit einem Heizelement versehen sein.

Weitere Vorteile und vorteilhafte Ausgestaltungen des Gegenstandes nach der Erfindung sind der Beschreibung, der Zeichnung und den Patentansprüchen entnehmbar.

### Zeichnung

Drei Ausführungsbeispiele eines Sensors gemäß der Erfindung sind in der Zeichnung schematisch vereinfacht dargestellt und werden in der nachfolgenden Beschreibung näher erläutert. Es zeigen
Figur 1 eine schematische Aufsicht auf einen erfindungsgemäß ausgestalteten Rußsensor;
Figur 2 einen Schnitt durch den Rußsensor nach Figur 1 entlang der Linie 11-11 in Figur 1;
Figur 3 einen Schnitt durch eine alternative Ausführungsform eines Rußsensors gemäß der Erfindung;
Figur 4 einen Schnitt durch eine weitere Ausführungsform eines erfindungsgemäßen Rußsensors;
Figur 5 Leitungswege bei dem Rußsensor nach Figur 1;
Figur 6 ein Ersatzschaltbild für eine resistive Gleichstrommessung; und
Figur 7 ein vereinfachtes Ersatzschaltbild für eine Impedanzmeßmethode.

### Beschreibung der Ausführungsbeispiele

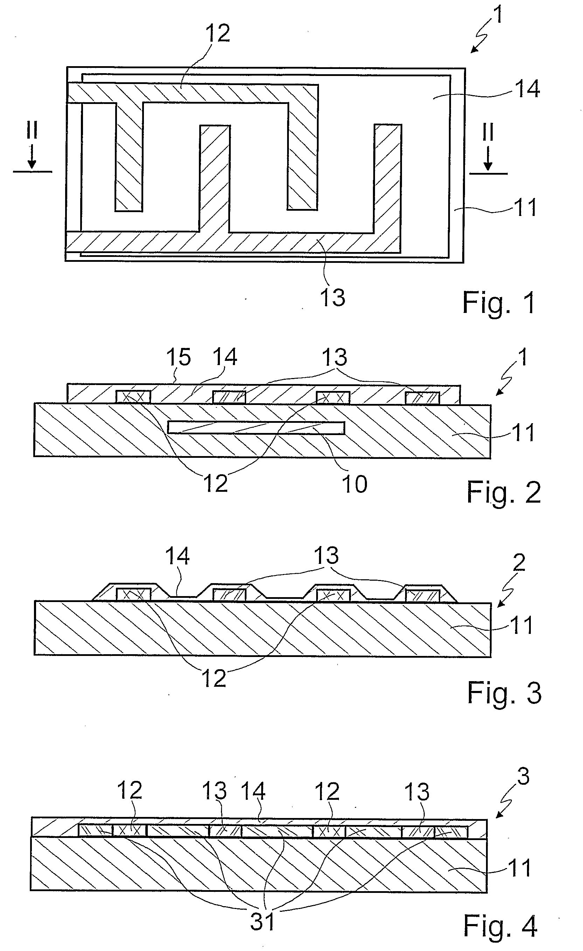

In den Figuren 1 und 2 ist ein Sensor 1 zur Detektion von Teilchen in einem Gasstrom dargestellt. Der Sensor 1 dient zum Einbau in einen Abgasstrang eines Kraftfahrzeuges und ist bevorzugt stromab eines Rußfilters eines Kraftfahrzeuges mit einem Dieselverbrennungsmotor angeordnet.

Der Sensor 1 umfaßt eine als Substrat dienende, plattenartige Trägerschicht 11, die aus einem hochisolierenden Werkstoff, beispielsweise aus einer Keramik wie Aluminiumoxid, gefertigt ist. Denkbar ist es auch, die Trägerschicht 11 aus einem alternativen Werkstoff, wie beispielsweise yttriumstabilisiertem Zirkoniumdioxid, zu fertigen. Bei hohen Betriebstemperaturen kann aus Isolationsgründen eine zusätzliche Isolationsschicht erforderlich sein.

In der Trägerschicht 11 ist ein hier nur symbolisch dargestelltes Heizelement 10 integriert, das zum Freibrennen des Sensors 1 von gegebenenfalls abgelagerten Teilchen, wie Rußpartikeln, dient.

Auf der Trägerschicht 11 ist eine Struktur aus zwei interdigitalen Kammelektroden 12 und 13 aufgedruckt, die aus Platin Pt gefertigt sind und über entsprechende Kontaktierungen mit einer Meß- und Steuereinheit verbindbar sind.

Des weiteren weist der Sensor 1 an der Seite der als Meßelektroden dienenden Kammelektroden 12 und 13 eine Schutzschicht 14 auf, mit der die Meßelektroden 12 und 13 und die Trägerschicht 11 überzogen sind.

Die Schutzschicht 14 besteht im vorliegenden Fall aus einem hochohmig leitenden Material, beispielsweise aus Aluminiumoxid Al₂O₃, das mit Kohlenstoffstoffteilchen bzw. Flammenruß versetzt ist.

Die Dicke der Schutzschicht 14 ist vorliegend so gewählt, daß sie im Bereich der Kammelektroden 12 und 13 maximal ein Zehntel des minimalen Abstandes zwischen den Kammelektroden 12 und 13 beträgt.

Die Schutzschicht 14 hat eine ebene Oberfläche 15, die ein gleichmäßiges Anlagern von Teilchen über die Fläche des Sensors 1 gewährleistet.

In Figur 3 ist eine alternative Ausführungsform eines Rußsensors 2 dargestellt, der im wesentlichen dem Sensor nach den Figuren 1 und 2 entspricht, sich von diesem aber dadurch unterscheidet, daß er eine Schutzschicht 14 aufweist, die über ihre gesamte Fläche eine im wesentlichen konstante Dicke hat. Die Meßfläche des Sensors 11 weist damit ein Profil auf. Durch diese Maßnahme wird eine Erhöhung des elektrischen Widerstands der Schutzschicht 14 im Bereich zwischen den beiden Kammelektroden 12 und 13 erreicht.

In Figur 4 ist eine weitere Ausführungsform eines Rußsensors 3 dargestellt, der wiederum weitgehend dem Sensor nach den Figuren 1 und 2 entspricht, sich von diesem aber dadurch unterscheidet, daß er eine sogenannte Füllschicht 31 aufweist, die in den Zwischenräumen zwischen den Kammelektroden 12 und 13 auf die Trägerschicht 11 aufgebracht ist und die die gleiche Dicke wie die Kammelektroden 12 und 13 hat. Die Füllschicht 31 besteht aus einem hochisolierenden Material, beispielsweise aus Aluminiumoxid. Sowohl die Füllschicht 31 als auch die Kammelektroden 12 und 13 sind mit der Schutzschicht 14 überzogen.

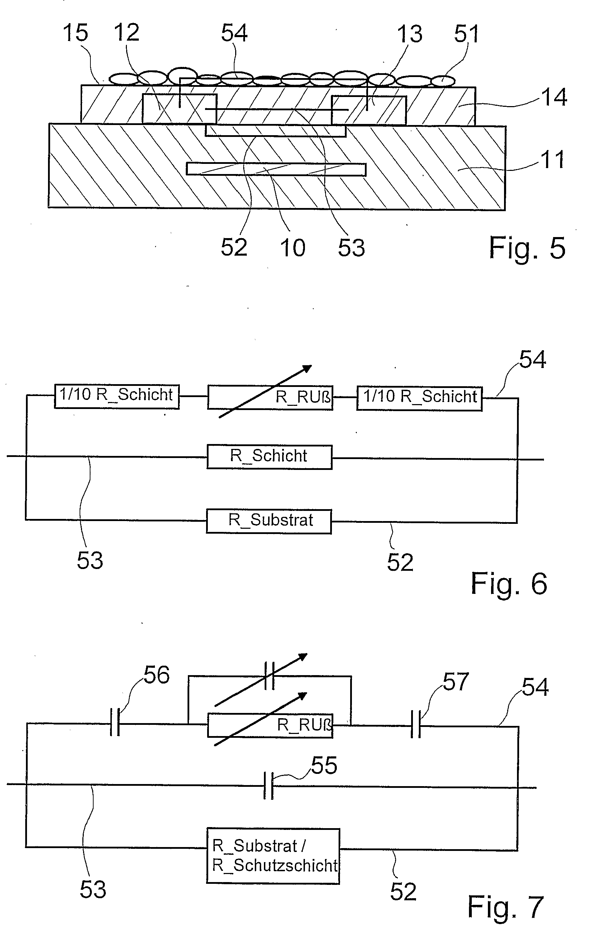

In Figur 5 ist der Sensor nach den Figuren 1 und 2 während seines Betriebs in vereinfachter Weise dargestellt, und zwar derart, daß auf der freien Oberfläche 15 der Schutzschicht 14 Rußpartikel 51 abgelagert sind.

Die Kammelektroden 12 und 13 stehen über drei Pfade miteinander in Verbindung, und zwar über einen ersten Pfad 52, der diese durch das Substrat 11 aus hochisolierendem Material verbindet, über einen parallelen zweiten Pfad 53, der die Kammelektroden 12 und 13 durch die Schutzschicht 14 hindurch verbindet, und über einen dritten Pfad 54, der die beiden Kammelektroden 12 und 13 über die auf der Oberfläche 15 abgelagerten Rußpartikel 51 und den jeweils über den Kammelektroden 12 bzw. 13 angeordneten Bereich der Schutzschicht 14 miteinander verbindet.

Die Widerstandsverhältnisse in diesem Sensor sind anhand des in Figur 6 dargestellten, stark vereinfachten Ersatzschaltbildes gezeigt. In dem ersten Pfad 52 liegt ein Widerstand R_Substrat vor, der durch das hochisolierende Material des Substrats 11 vorgegeben ist. In dem zweiten Pfad 53 liegt ein Widerstand R_Schicht vor, der geringer ist als derjenige des Substrats 11, jedoch beträchtlich höher ist als ein durch die Rußpartikel 51 vorgegebener Widerstand. In dem dritten Pfad 54 herrscht ein Widerstand, der sich aus dem Widerstand der Schutzschicht 14 innerhalb des dünnen Bereichs oberhalb der Kammelektroden 13 und 14 sowie dem veränderlichen Widerstand R_Ruß ergibt, der durch die Konzentration an Rußpartikeln 51 auf der Schutzschicht 14 vorgegeben wird. Mit wachsender Rußpartikelkonzentration auf der Schutzschicht 14 verringert sich der Widerstand R_Ruß, woraus auf den Zustand des betreffenden Abgases geschlossen werden kann. Die Widerstände R_Substrat und R_Schicht bleiben konstant.

In Figur 7 ist ein stark vereinfachtes Ersatzschaltbild dargestellt, das die Verhältnisse wiedergibt, wenn eine Impedanzmessung mit Wechselstromsignalen durchgeführt und eine Schutzschicht aus hochisolierendem Material, wie Aluminiumoxid Al₂O₃, eingesetzt wird. In diesem Falle bilden die Rußpartikel 51 ein Schaltungsglied mit veränderlichem Widerstand und veränderlicher Kapazität, d. h. ein Schaltungsglied nach Art eines RC-Glieds. Die Meßelektroden 12 und 13 bilden zusammen eine Kapazität 55, wobei die Schutzschicht 14 bzw. das Substrat 11 als Dielektrikum wirkt. Die Elektrode 12 bildet zusammen mit den Rußpartikeln 51 eine Kapazität 56. Die Elektrode 13 bildet zusammen mit den Rußpartikeln 51 eine Kapazität 57.

## Patentansprüche

1. Sensor zur Detektion von Teilchen (51) in einen Gasstrom, insbesondere von Rußpartikeln in einem Abgasstrom, mit mindestens zwei Messelektroden (12, 13), die auf einem Substrat (11) aus einem elektrisch isolierenden Werkstoff angeordnet sind, wobei die Messelektroden (12, 13) von einer Schutzschicht (14) überzogen sind und die Schutzschicht (14) aus einem elektrisch isolierenden Material, wie Aluminiumoxid Al₂O₃ oder Zirkoniumoxid ZrO₂, hergestellt ist, **dadurch gekennzeichnet, dass** das elektrisch isolierende Material der Schutzschicht (14) mit einem leitfähigen Material, wie ein Metall oder Graphit, dotiert ist.

2. Sensor nach Anspruch 1, **dadurch gekennzeichnet, dass** die Schutzschicht (14) mit Kohlenstoffteilchen bzw. Flammenruß versetzt ist.

3. Sensor nach Anspruch 1 oder 2, **dadurch gekennzeichnet, dass** die Schutzschicht (14) zumindest im Bereich der mindestens zwei Messelektroden (12, 13) eine Dicke aufweist, die maximal einem Zehntel des Abstandes der beiden Messelektroden (12, 13) entspricht.

4. Sensor nach einem der Ansprüche 1 bis 3, **dadurch gekennzeichnet, dass** zwischen den beiden Messelektroden (12, 13) eine Füllschicht (31) angeordnet ist, deren Dicke derjenigen der Messelektroden (12, 13) entspricht.

5. Sensor nach einem der Ansprüche 1 bis 4, **dadurch gekennzeichnet, dass** die Messelektroden (12, 13) interdigitale Kammelektroden sind.

6. Sensor nach einem der Ansprüche 1 bis 5, **gekennzeichnet durch** ein Heizelement (10) im Sensor.

## Claims

1. Sensor for detecting particles (51) in a gas flow, in particular soot particles in an exhaust gas flow, comprising at least two measuring electrodes (12, 13), which are arranged on a substrate (11) of an electrically insulating material, the measuring electrodes (12, 13) being coated by a protective layer (14) and the protective layer (14) being produced from an electrically insulating material, such as alumina Al₂O₃ or zirconia ZrO₂, **characterized in that** the electrically insulating material of the protective layer (14) is doped with a conductive material, such as a metal or graphite.

2. Sensor according to Claim 1, **characterized in that** the protective layer (14) is mixed with carbon particles or lamp black.

3. Sensor according to Claim 1 or 2, **characterized in that** the protective layer (14) has at least in the region of the at least two measuring electrodes (12, 13) a thickness that corresponds as a maximum to one tenth of the distance between the two measuring electrodes (12, 13).

4. Sensor according to one of Claims 1 to 3, **characterized in that** arranged between the two measuring electrodes (12, 13) is a filling layer (31), the thickness of which corresponds to that of the measuring electrodes (12, 13).

5. Sensor according to one of Claims 1 to 4, **characterized in that** the measuring electrodes (12, 13) are interdigital comb electrodes.

6. Sensor according to one of Claims 1 to 5, **characterized by** a heating element (10) in the sensor.

## Revendications

1. Capteur pour la détection de particules (51) dans un flux de gaz, notamment, de particules de suie dans un flux de gaz d'échappement, comprenant au moins deux électrodes de mesure (12, 13) qui sont disposées sur un substrat (11) constitué d'un matériau électriquement isolant, les électrodes de mesure (12, 13) étant recouvertes d'une couche de protection (14) et la couche de protection (14) étant fabriquée à partir d'un matériau électriquement isolant comme l'oxyde d'aluminium Al₂O₃ ou l'oxyde de zirconium ZrO₂, **caractérisé en ce que** le matériau électriquement isolant de la couche de protection (14) est dopé avec un matériau conducteur tel qu'un métal ou du graphite.

2. Capteur selon la revendication 1, **caractérisé en ce que** la couche de protection (14) est mélangée avec des particules de carbone ou de la suie de combustion.

3. Capteur selon la revendication 1 ou 2, **caractérisé en ce que** la couche de protection (14), au moins dans la zone des au moins deux électrodes de mesure (12, 13), présente une épaisseur qui correspond au maximum à un dixième de l'écart entre les deux électrodes de mesure (12, 13).

4. Capteur selon l'une des revendications 1 à 3, **caractérisé en ce qu'**entre les deux électrodes de mesure (12, 13) est disposée une couche de remplissage (31) dont l'épaisseur correspond à celle des électrodes de mesure (12, 13).

5. Capteur selon l'une des revendications 1 à 4, **caractérisé en ce que** les électrodes de mesure (12, 13) sont des électrodes en peigne interdigitées.

6. Capteur selon l'une des revendications 1 à 5, **caractérisé par** un élément chauffant (10) dans le capteur.
